# EUROPÄISCHE PATENTSCHRIFT

(11) **EP 2 913 662 B1**
(45) Veröffentlichungstag und Bekanntmachung des Hinweises auf die Patenterteilung: **30.08.2017**
(21) Anmeldenummer: 14157121.6
(22) Anmeldetag: 28.02.2014
(51) Int. Cl.: G01N 21/65, B82Y 15/00

(54) **Vorrichtung zur Charakterisierung von Nanopartikeln, und Verwendung der Vorrichtung**
Device for the characterisation of nanoparticles, and use of the device
Dispositif de caractérisation de nanoparticules, et utilisation du dispositif

(43) Veröffentlichungstag der Anmeldung: 02.09.2015
(73) Patentinhaber: Justus-Liebig-Universität Gießen, 35390 Gießen (DE)
(72) Erfinder: Chen, Limei, 35392 Gießen (DE); Klar, Peter, 35392 Gießen (DE); Kroth, Kathrin, 35398 Gießen (DE)
(74) Vertreter: Stumpf, Peter

(56) Entgegenhaltungen:
- WO-A1-2013/062554
- WO-A2-2013/015810
- US-A1- 2011 122 405
- "Nanoteilchen", Wikipedia, 12. Februar 2014 (2014-02-12), Seiten 1-15, XP055132623, Gefunden im Internet: URL:http://de.wikipedia.org/w/index.php?ti tle=Nanoteilchen&oldid=127502711 [gefunden am 2014-07-31]
- SABINA REBE RAZ ET AL: "Development of surface plasmon resonance-based sensor for detection of silver nanoparticles in food and the environment", ANALYTICAL AND BIOANALYTICAL CHEMISTRY, SPRINGER, BERLIN, DE, Bd. 403, Nr. 10, 27. März 2012 (2012-03-27), Seiten 2843-2850, XP035074977, ISSN: 1618-2650, DOI: 10.1007/S00216-012-5920-Z
- PETERS R ET AL: "Identification and characterization of organic nanoparticles in food", TRAC, TRENDS IN ANALYTICAL CHEMISTRY, ELSEVIER, AMSTERDAM, NL, Bd. 30, Nr. 1, 1. Januar 2011 (2011-01-01) , Seiten 100-112, XP027565744, ISSN: 0165-9936 [gefunden am 2010-12-18]
- KAREN TIEDE ET AL: "Detection and characterization of engineered nanoparticles in food and the environment", FOOD ADDITIVES AND CONTAMINANTS, TAYLOR AND FRANCIS, LONDON, GB, Bd. 25, Nr. 7, 1. Juli 2008 (2008-07-01), Seiten 795-821, XP002656373, ISSN: 0265-203X, DOI: 10.1080/02652030802007553 [gefunden am 2008-06-19]
- Jan Herrmann: "Nanoparticle characterisation instrumentation", , 1. November 2012 (2012-11-01), Seiten 1-11, XP055132321, Gefunden im Internet: URL:http://www.measurement.gov.au/ScienceT echnology/Documents/NanoparticleCharacteri sation.pdf [gefunden am 2014-07-30]

## Beschreibung

Die Erfindung betrifft eine Vorrichtung zur Charakterisierung von Nanopartikeln insbesondere auch von metallischen Nanopartikeln in einer Probe, sowie die Verwendung der Vorrichtung. Als Nanopartikel gelten im Folgenden Partikel mit einem Durchmesser der Querschnittsfläche von unter 500 nm. Diese können sphärisch, ellipsoid oder unregelmäßig geformt sein. Das Charakterisieren umfasst sowohl die Bestimmung der Größe als auch die Bestimmung der chemischen Zusammensetzung der einzelnen Nanopartikel in einer Probe. Eine Probe ist ein Stoff oder eine Mischung von Stoffen, die auf Nanopartikel untersucht bzw. deren Nanopartikel untersucht werden.

### [Stand der Technik]

Die Untersuchung von Nanopartikeln in einer Probe insbesondere hinsichtlich ihrer Materialeigenschaften z. B. von Halbleitern oder Pigmenten erfolgt immer häufiger mittels Ramanspektroskopie. Hierbei wird die zu untersuchende Probe mit monochromatischem Licht bestrahlt, üblicherweise aus einem Laser. Im Spektrum des an Nanopartikeln in der Probe gestreuten Lichts werden neben der eingestrahlten Frequenz (Rayleigh-Streuung) noch weitere Frequenzen beobachtet. Die Frequenzunterschiede zum eingestrahlten Licht entsprechen den für das Material charakteristischen Energien von Rotations-, Schwingungs-, Phonon- oder Spin-Flip-Prozessen. Die Materialien, bei denen diese weiteren Frequenzen in dem von ihnen zurückgestreuten Licht vorliegen, werden als raman-aktiv bezeichnet. Das erhaltene Spektrum ist für verschiedene raman-aktive Materialien, aus denen die Nanopartikel bestehen, charakteristisch, ähnlich dem Spektrum der Infrarotspektroskopie. Deshalb kann mittels Ramanspektroskopie die Zusammensetzung und bei einer ortsaufgelösten Messung die Größe eines Nanopartikels bestimmt werden. Es kann also charakterisiert werden.

Neben der klassischen Ramanspektroskopie existieren noch einige Varianten und Weiterentwicklungen zur Charakterisierung von Raman-aktiven Materialien.

Im Stand der Technik sind auch Vorrichtungen zur oberflächenverstärkten (SERS) oder spitzenverstärkten Ramanspektroskopie (TERS) bekannt, um sogar einzelne Raman-aktive Moleküle zu charakterisierten.

Diese Verfahren eignen sich aber nicht für die Charakterisierung aller Nanopartikel. Insbesondere Metalle zeigen keine Raman-Signale, lassen sich also nicht direkt mit konventioneller Ramanspektroskopie, TERS oder SERS nachweisen.

Als Metalle sind hier folgende Elemente und Kombinationen folgender Elemente zu verstehen: Li, Na, K, Rb, Be, Mg, Ca, Sr, Ba, Sc, Y, La, Ac, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, TI, Sn, Bi, Eu, Gd, La, Ce, Pr, Nd, Sm, Tb, Dy, Ho, Er, Tm, Yb, Lu.

Bekannte plasmonische Resonatorstrukturen bestehen aus metallischen Nanostrukturen, bei denen zwischen einzelnen Teilstrukturen, Hot-Spots mit lokaler Feldverstärkung entstehen. Sie werden auch als statische feste Anordnungen in der Sensorik eingesetzt, z. B. zur Detektion von Raman-aktiven Molekülen aufgrund des oberflächenverstärkten Raman-Effekts. Dies ist im Stand der Technik beschrieben und es gibt Lösungen für Einzelmolekül-Sensoren basierend auf diesen statischen plasmonischen Resonatoranordnungen.

In der US 8 456 630 B2 wurden Nanopartikel mit EGF-Rezeptoren in eine Glasfaser eingebracht, wobei die Stoffe, die an die EGF-Rezeptoren andocken, raman-aktiv sind. Dadurch lässt sich die Beladung der EGF feststellen.

Diese bestehenden Vorrichtungen sind insoweit nachteilig, dass es bisher kein routinemäßig, schnell einsetzbares Verfahren zur Charakterisierung von Nanopartikel im Hinblick auf ihre Zusammensetzung und Größe, außer den mittels elektronenmikroskopischen oder elektronenspektroskopische Verfahren im Ultrahochvakuum arbeitenden Vorrichtungen, gibt. Dies gilt insbesondere für Nanopartikel, die aus Metall oder Metallkombinationen bestehen, die kein Ramansignal verursachen.

Diese Anlagen wiederum sind teuer in der Anschaffung und im Unterhalt und die Messungen im Ultrahochvakuum (UHV) sind zeitintensiv, so dass sie sich nur schwer routinemäßig in der Analytik einsetzen lassen, wenn eine Vielzahl von Proben untersucht werden muss.

### [Aufgabe]

Aufgabe der vorliegenden Erfindung ist es, die Nachteile des Standes der Technik zu vermeiden und eine zuverlässige Vorrichtung zur schnellen und eindeutigen Charakterisierung von Nanopartikeln insbesondere auch von metallischen Nanopartikeln in einer zu untersuchenden Probe bereitzustellen.

### [Lösung der Aufgabe]

Die Lösung dieser Aufgaben ergibt sich aus den Merkmalen des Hauptanspruchs, während vorteilhafte Ausgestaltungen und Weiterbildungen der Erfindung den Unteransprüchen entnehmbar sind.

Die Vorrichtung zur Charakterisierung von Nanopartikeln **30** umfasst als ein zentrales Element eine Messschicht **5.** Diese Messschicht **5** besteht aus einer Metallschicht (z.B. aus Elementmetallen wie Au, Ag, Cu oder Metalllegierungen) **10,** deren Dicke frei wählbar ist, und einer raman-aktiven Schicht **15** von wenigen Monolagen Dicke (1 nm bis 10 nm, bevorzugt 2 nm bis 5 nm alternativ 1 nm bis 3 nm, 3 nm bis 7 nm oder 7 bis 10 nm). Als Material für die raman-aktive Schicht kommen insbesondere raman-aktive Farbstoffe wie z.B. Rhodamin, Cumarin, Pyridin in Frage. Grundsätzlich ist aber jedes Material, das raman-aktiv ist, geeignet.

Die Metallschicht **10** und die raman-aktive Schicht **15** sind hierbei so ausgebildet, dass die raman-aktive Schicht **15** der zu untersuchenden Probe, die das Nanopartikel **30** enthält, zugewandt ist. Damit sind Metallschicht **10** und raman-aktive Schicht **15** so zueinander angeordnet, dass die raman-aktive Schicht **15** dem Nanopartikel **30** zugewandt angeordnet ist und sich somit für die Messung zwischen Nanopartikel **30** und der Metallschicht **10** befindet.

Die Vorrichtung umfasst weiterhin eine Messplatte **20.** Bei der Messplatte **20** handelt es sich zum Beispiel um einen Siliziumwafer aber auch Strukturen aus Glas o.ä. sind möglich.

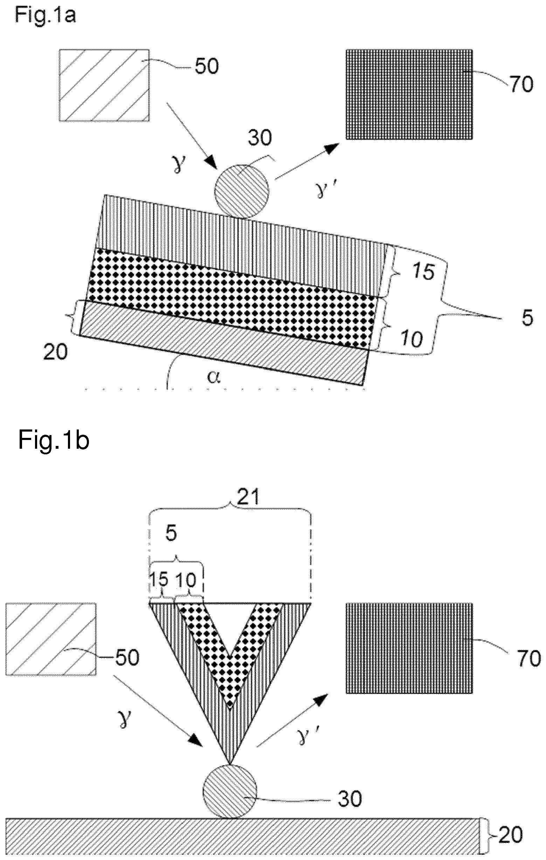

In einer ersten Alternative **(****Fig. 1a****)** befindet sich die Messschicht **5** zumindest auf Abschnitten der Oberfläche einer Messplatte **20** der Vorrichtung. Diese Messschicht **5** umfasst eine Metallschicht **10** und auf dieser eine raman-aktive Schicht **15.** Alternativ kann die Messplatte selbst **20** aus Metall bestehen und somit allein die Metallschicht **15** bilden. In diesem Fall wird dann zur Ausbildung der Messschicht **5** nur eine raman-aktive Schicht **15** auf die Messplatte **20** aufgebracht.

In einer weiten Alternative **(****Fig. 1b****)** befindet sich auf der Oberfläche der Messplatte **20** keine Messschicht. Die Vorrichtung umfasst hier eine Messsonde **21,** auf deren Oberfläche sich zumindest abschnittsweise eine Metallschicht **10** und auf dieser eine raman-aktive Schicht **15** befindet. Diese bilden dann die Messschicht **5.** Diese Messsonde **21** kann beispielweise eine konventionelle metallische oder mit einer Metallschicht versehene Messspitze, wie sie z. B. in der Rastersondenmikroskopie verwendet wird, sein.

Zur Messung ist diese Messschicht **5** mit dem Nanopartikel **30** kontaktierbar. Die Messplatte **20** und die Messsonde **21** sind vorzugsweise beweglich zueinander ausgebildet. Die relative Bewegung zwischen Messplatte **20** und Messsonde **21** erfolgt wie in der Rastersondenmikroskopie (z.B. scanning tunneling microscopy STM oder atomic force microscopy AFM) vorzugsweise über Stellmotoren oder Piezoaktoren. Die Oberfläche der Messplatte **20,** auf der sich eine zu untersuchende Probe mit Nanopartikel **30** befindet, kann so mittels dieser Messsonde **21** in einem Rasterprozess Punkt für Punkt abgetastet werden.

Die Herstellung der Metallschicht **10** und der raman-aktiven Schicht **15** der Messschicht kann in allen Ausführungsformen beispielsweise über Sputtern, CVD (chemical vapor deposition), PVD (physical vapor deposition) oder ein anderes geeignetes Verfahren erfolgen. Insbesondere für die Herstellung der raman-aktiven Schicht ist auch spin-coating oder dip-coating geeignet.

Die Vorrichtung umfasst weiterhin eine Lichtquelle 50 und eine Detektorvorrichtung 70. Die Lichtquelle ist entweder von sich aus monochromatisch oder ihr Licht wird innerhalb des Strahlengangs monochromatisier, und stellt eine Wellenlänge zwischen 350 nm und 1500 nm bereit. Diese Lichtquelle ist beispielsweise ein Laser. Die Wellenlänge beträgt bevorzugt 400 nm bis 1000 nm. Der Betrieb der Lichtquelle kann hierbei kontinuierlich oder gepulst erfolgen.

Für die Ablenkung des Lichtes umfasst die erfindungsgemäße Vorrichtung optional ein oder mehrere optische Elemente z.B. Spiegel oder Linsen. Diese sind vorzugsweise beweglich ausgebildet. Die Bewegung der optischen Elemente kann z.B. über einen Stellmotor erfolgen. Damit kann beispielsweise der Lichtstrahl über die Oberfläche der Messplatte geführt werden, um so stets nur einen bestimmten Bereich zu beleuchten. Dies ermöglicht eine Messung mit einer höheren Ortsauflösung.

Die raman-aktive Schicht 15 dient zur Erzeugung einer Ramanstreuung der Strahlung der Lichtquelle **50.** Sie fungiert somit als Kalibrierungsmittel, weil durch die Ramanstreuung an ihr, unabhängig davon, ob ein Nanopartikel **30** an der untersuchten Stelle der Probe vorliegt, immer ein eindeutiges Ramansignal, das von der Detektionsvorrichtung **70** erfasst werden kann, liefert. Außerdem dient die raman-aktive Schicht **15** als Verstärker zwischen der Metallschicht **10** und dem/den Nanopartikel/n **30.** Durch die raman-aktive Schicht **15** zwischen der Metallschicht **10** und dem/den Nanopartikel/n **30** wirken diese als Resonatorstruktur für elektromagnetische Strahlung und bewirken eine lokale Verstärkung des Ramansignals der raman-aktiven Schicht **15.** Das zurückgestreute Raman-Signal wird mittels einer Detektionsvorrichtung **70** ausgewertet. Zur exakten lokalen Zuordnung des Ramansignals ist die Detektionsvorrichtung **70** bevorzugt ortaufgelöst ausgebildet. Die Detektionsvorrichtung **70** enthält optional optische Elemente zur Strahlführung (z. B. Spiegel oder Linse), zur wellenlängenabhängigen Lichtselektion (z. B. Spektralfilter, Gitter, Prisma) sowie einen lichtempfindlichen Detektor zur Photonendetektion (z. B. Photoelement, Photomultiplier, CCD-Kamera) mit einer Auswerteelektronik.

Aus der lokalen Veränderung des Ramansignals insbesondere seiner materialspezifischen Verstärkung, d.h. Amplitudenüberhöhungen durch die Anwesenheit der/des Nanopartikel/s **30,** ist es möglich, diese/s als Metall oder Nichtmetall zu charakterisieren.

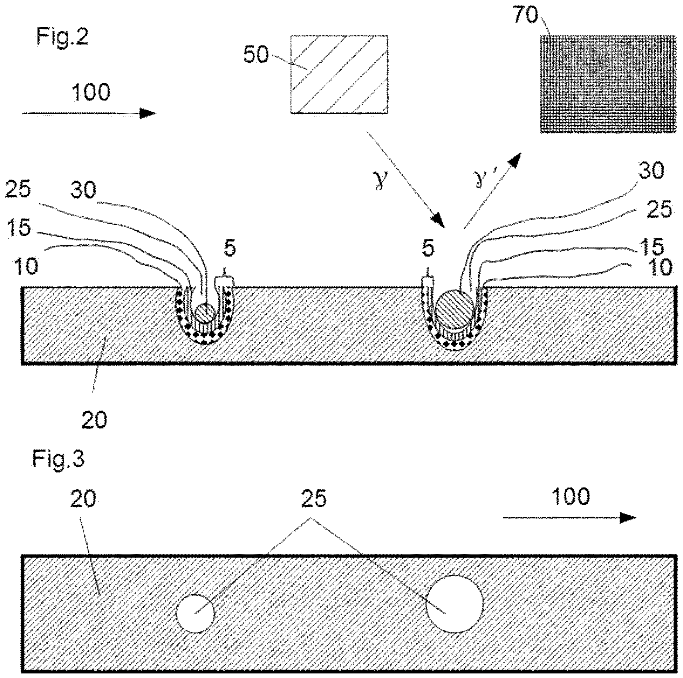

In einer weiteren Ausführungsform **(****Fig. 2****)** umfasst die Messplatte **20** wenigstens zwei Vertiefungen **25** unterschiedlicher Größe. Diese Vertiefungen **25** sind so ausgebildet, dass nur Nanopartikel **30** unterhalb einer bestimmten Durchmesser der Querschnittsflächen in diese Vertiefungen **25** gelangen können. Diese Vertiefungen **25** können beispielsweise als Mulden ausgeführt sein.

Hierbei weist die Messplatte **20** vorzugsweise zumindest abschnittsweise eine Metallschicht **10** und eine raman-aktiven Schicht **15** innerhalb der Vertiefungen **25** auf.

Es ist weiterhin möglich, diese in **Fig. 2** gezeigte Ausführungsform der Vorrichtung mit einer Messsonde **21,** wie sie in **Fig. 1b** gezeigt ist, zu versehen. Hierbei weist die Messplatte **20** keine Messschicht **5** auf.

Der Durchmesser der Querschnittsflächen der Vertiefungen **25** hat eine Größe von 1 nm bis 1000 nm, bevorzugt 5 nm bis 500 nm, 10 nm bis 250 nm, oder 20 nm bis 100 nm. Ihre Tiefe liegt im Bereich von 1 nm bis 1000 nm, bevorzugt 5 nm bis 500 nm, 10 nm bis 250 nm, oder 20 nm bis 100 nm.

Die Vertiefungen sind so angeordnet, dass die Probe mit den Nanopartikeln **30** zuerst über die kleinsten und dann über immer größere Vertiefungen geführt wird oder sich bewegt. Dies kann z. B. dadurch erreicht werden, dass die Messplatte in einen Winkel α von 0° bis 5° alternativ 1 ° bis 4° gegenüber der Waagerechtergeneigt wird. Vorzugsweise ist der Winkel variabel einstellbar, um die Geschwindigkeit, mit der die Probe fließt, zu verändern. Dadurch kann die Probe sich von oben nach unten auf der Messplatte **20** verteilen. Der Bereich, über den die Probe mit den Nanopartikeln **30** zuerst geleitet wird, bildet den vordersten Bereich. Da die Vertiefungen **25** so ausgebildet sind, dass nur Strukturen unterhalb einer bestimmten Größe in sie gelangen können, findet eine Separation der Nanopartikeln **30** in Größenklassen statt.

Die kleinsten Partikel befinden sich im, in Fließrichtung gesehen, vordersten Bereich, die größeren Partikel sind weiter hinten. Größenklassen sind hierbei beispielsweise: Strukturen kleiner als 1 nm, 2 nm, 5 nm, 10 nm, 20 nm, 50 nm, 100 nm, 500 nm, 1000 nm. Der Vertiefungsquerschnitt legt hierbei die Obergrenze einer jeden Größenklasse fest. Somit ist für jeden Bereich der Messplatte bekannt, wie groß die Nanopartikel **30** sind, die dort registriert werden. Vorzugsweise ist die Messplatte **20** wie eine Lochplatte ausgebildet. Dies ermöglich ein effektives Sieben der Nanopartikel **30** der Probe.

Durch die Anordnung der Vertiefungen **25** ist so die Größenverteilung der im Substrat befindlichen Nanopartikel **30** aus ihrer örtlichen Verteilung in den Vertiefungen **25** bestimmbar.

Die Erzeugung der Vertiefungen erfolgt bevorzugt über lithographische Verfahren, insbesondere Elektronstrahllithographie, Photolithographie oder lonenstrahllithographie möglicherweise gefolgt von Ätzverfahren zur Strukturübertragung wie lonenstrahlätzen, Plasmaätzen oder nasschemisches Ätzen. Andere geeignete Verfahren (z. B. Selbstorganisation) sind aber auch möglich.

Diese Detektionsvorrichtung **70** kann sich beispielsweise oberhalb der Messplatte **20** oder der Messsonde **21** befinden. Wenn die Messplatte **20** transparent ausgebildet ist, kann sie sich auch unterhalb von dieser befinden.

In einer weiteren Ausführungsform ist die Detektorvorrichtung auf der Messplatte **20** angeordnet.

In einer weiteren Ausführungsform ist die Detektorvorrichtung in die Messplatte **20** oder Sonde **21** integriert. Dies führt zu einem sehr kompakten Aufbau der Vorrichtung. Des Weiteren weist hier die Detektionsvorrichtung **70** eine hohe Ortsauflösung auf, ohne dass weitere Bauteile notwendig sind. In einer weiteren Ausführungsform weist die Vorrichtung einen Bereich mit einem elektrischen und/oder einem magnetischen Feld auf, der so ausgebildet ist, dass eine elektrische und/oder magnetische Kraft die metallischen Nanopartikel **30** der fließfähigen Probe in Richtung der Metallschicht **10** der Messschicht **5** bewegt. So hat ein höherer Anteil der Nanopartikel **30** Kontakt mit der Messschicht **5** und kann nachgewiesen werden.

### Verfahren

Zur Durchführung des Verfahrens wird eine Probe (z. B. eine Flüssigkeit oder ein Pulver) mit Nanopartikeln **30** in Kontakt mit der Messschicht **5** gebracht. Hierbei gelangen auch einzelne in der Probe befindliche Partikel **30** in Kontakt mit der Messschicht **5.**

Der Kontaktbereich wird nach der Kontaktierung durch eine, vorzugsweise monochromatische, Lichtquelle **50** bestrahlt.

Durch die raman-aktive Schicht **15** kommt es stets zu einer Ramanstreuung und somit zu einem Ramansignal, das als Referenzsignal zur Kalibrierung dient.

Der Raum zwischen dem Nanopartikel **30** und der Metallschicht **10** ist im Wesentlichen mit der raman-aktiven Schicht **15** befüllt. Ist das Nanopartikel **30,** metallisch, kommt es nun zu einer materialspezifischen Verstärkung des Ramansignals d.h. zu einer lokalen Überhöhungen des Ramansignals der Messschicht.

Die Bestrahlung erfolgt vorzugsweise so, dass dem zurückgestreuten Ramansignal ein exakter Bereich zugeordnet werden kann. Ein bevorzugtes Beleuchtungsverfahren ist, dass das Licht von der Lichtquelle pulsweise ausgestrahlt wird. Wenn jetzt entweder der Lichtstrahl oder die Messplatte bewegt wird, beleuchtet jeder Puls immer nur einen gewissen Bereich. Das stellt eine exakte Zuordnung des beleuchteten Bereiches und dessen Ramansignals sicher.

Zur Auswertung wird die Intensität des Ramansignals verwendet. Die Messung erfolgt bevorzugt ortsaufgelöst. Durch die materialspezifische Verstärkung des Ramansignals in der Resonatoranordnung aus der Metallschicht **10,** dem Nanopartikel **30** und der dazwischenliegenden raman-aktiven Schicht **15** kommt es zu einer starken Erhöhung der Intensität des Ramansignals. Da die raman-aktive Schicht **15** mit bevorzugt 1 nm bis 10 nm Dicke quasi-monolagig ist, ergeben sich ähnliche lokale Raman-Verstärkungen (Verstärkungsfaktor von 10⁶) wie bei einzelnen Molekülen in der Lücke, die detektiert werden. Die Intensität des gestreuten Ramansignals wird mittels einer Detektionsvorrichtung **70** registriert und ausgewertet. Die Detektionsvorrichtung umfasst optional optische Elemente zur Strahlführung (z. B. Spiegel oder Linse), zur wellenlängenabhängigen Lichtselektion (z. B. Spektralfilter, Gitter, Prisma) sowie einen lichtempfindlichen Detektor zur Photonendetektion (z. B. Photoelement, Photomultiplier, CCD-Kamera) mit einer Auswerteelektronik, um das Signal des zurückgestreuten Lichts y' mit dem Referenzsignal der reinen raman-aktiven Schicht und gegebenenfalls mit dem Signal von verschiedener Materialien, die aus Vergleichsmessungen gewonnen wurden, zu vergleichen.

In der Auswertung wird aus der Amplitude dieses verstärkten Ramansignals die Identität des Nanopartikels **30** bestimmt. Durch die starke Erhöhung des Signals lässt sich ein metallisches Partikel **30** von einem nichtmetallischen Partikel unterscheiden, da nichtmetallische Partikel keine Verstärkung des Ramansignals hervorrufen.

Besteht das Nanopartikel **30** aus einem nichtmetallischen, aber raman-aktiven Material z.B. Kohlenstoff oder Silizium, so kommt es nicht zu einer lokalen Ramanverstärkung. Diese raman-aktiven Nanopartikel **30** bewirken aber selbst eine Ramanstreuung. Das bedeutet, dass es auch hier eine Veränderung des Ramansignals im Vergleich vom Ramansignal der reinen raman-aktiven Schicht **15** gibt. Das ursprüngliche Ramansignal der raman-aktiven Schicht **15** stellt ein Referenzsignal da und kann zur Kalibrierung der Vorrichtung genutzt werden. Es wird in der Auswertung des detektierten Ramansignals herausgerechnet. Das ermöglicht auch, nichtmetallische raman-aktive Nanopartikel wie mit einem herkömmlichen Ramanspektrometer zu charakterisieren.

In einer weiteren Ausführungsform wird statt oder zusätzlich zu der Verstärkung des Raman-Effekts als Sensorsignal zur Charakterisierung der metallischen Nanopartikel **30** eine Photolumineszenzverstärkung genutzt. Wenn die Photolumineszenzverstärkung zusätzlich verwendet wird, ist die raman-aktive Schicht **15** hierzu nicht nur raman-aktiv sondern auch lumineszierend. Alternativ weist die Messschicht **5** neben der raman-aktiven Schicht **15** und der Metallschicht **10** noch zusätzlich eine lumineszierende Schicht auf. Wenn die Photolumineszenzverstärkung statt der Verstärkung des Raman-Effekts als Messgröße dient, ist die Schicht lumineszierend, aber nicht mehr zwangsläufig raman-aktiv.

Die Herstellung der Metallschicht **10** und der raman-aktiven Schicht **15** kann beispielsweise über Sputtern, CVD (chemical vapor deposition), PVD (physical vapor deposition) oder ein anderes geeignetes Verfahren erfolgen. Insbesondere für die Herstellung der raman-aktiven Schicht ist auch spin-coating oder dip-coating geeignet.

Eine Verwendung der erfindungsgemäßen Vorrichtung ist, Nanopartikel in Lebensmitteln zu detektieren und zu identifizieren. Da für die Herstellung bestimmter Lebensmittel Nanopartikel insbesondere metallische Nanopartikel eingesetzt werden, ist dies vorteilhaft.

Eine weitere Anwendung der erfindungsgemäßen Vorrichtung und des erfindungsgemäßen Verfahrens liegt im Bereich der Umweltanalytik, z. B. um im Rahmen der Trinkwasseraufbereitung eventuell nicht herausgefilterte Nanopartikel im Wasser zu charakterisieren. Dies ist bisher, insbesondere bei metallischen Nanopartikeln, nur unter großem Aufwand möglich.

Die Vorrichtung gewährleistet dadurch, dass in ihr gleichzeitig die Größe und Zusammensetzung der Nanopartikel einer Probe bestimmt werden, eine schnelle und eindeutige Charakterisierung von Nanopartikeln insbesondere auch von metallischen Nanopartikeln.

### [Abbildungslegenden und Bezugszeichenliste]

In der nachfolgenden Beschreibung sind weitere Aspekte und Ausführungsbeispiele der vorliegenden Erfindung offenbart. Diese Offenbarung der Erfindung soll die Merkmale oder Hauptelemente der Erfindung nicht auf ein spezifisches Ausführungsbeispiel beschränken. Vielmehr können die verschiedenen Elemente, Aspekte und Merkmale, die in den Ausführungsbeispielen offenbart sind, durch einen Fachmann auf dem Gebiet auf verschiedene Arten kombiniert werden, um einen oder mehrere Vorteile der vorliegenden Erfindung zu erzielen.

**Fig. 1** zeigt den schematischen Aufbau der Vorrichtung in der Seitenansicht. Mit verschiedenen Ausführungsformen der Vorrichtung.

Bei der in **Fig. 1a** gezeigten Vorrichtung ist die Messschicht **5** mit der Metallschicht (z. B. aus Elementmetallen wie Au, Ag, Cu oder Metalllegierungen) **10** und der raman-aktiven Schicht **15,** in die Messplatte **20** integriert. Für die Messung fließt eine Probe mit Nanopartikeln **30** über diese Schicht. Dies kann z.B. dadurch erreicht werden, dass die Messplatte in einen Winkel α von 0° bis 10° alternativ 1 ° bis 4° gegenüber der Waagerechten geneigt wird. Vorzugsweise ist der Winkel variabel einstellbar, um die Geschwindigkeit, mit der die Probe fließt, zu verändern. An den Stellen, an denen metallische Nanopartikel **30** vorliegen, bilden die Metallschicht **10** und das Nanopartikel **30** einen im Wesentlichen von der raman-aktiven Schicht **15** gefüllten Resonator.

Bei der in **Fig. 1b** gezeigten Vorrichtung ist die Messschicht **5** mit der Metallschicht (z. B. aus Elementmetallen wie Au, Ag, Cu oder Metalllegierungen) **10** und der raman-aktiven Schicht **15** in eine Messsonde **21** integriert. Für die Messung werden die Messsonde **21** und die Messplatte **20** relativ zueinander bewegt. Dies kann beispielsweise über einen Stellmotor oder Piezoaktor (beide nicht abgebildet) erfolgen. Wenn die Messsonde **21** mit der Messschicht **5** auf ihrer Oberfläche mit einem Nanopartikel **30** in Kontakt kommt, bilden die Metallschicht **10** und das Nanopartikel **30** einen im Wesentlichen von der raman-aktiven Schicht **15** gefüllten Resonator. Weiterhin umfassen alle geeigneten Ausführungsformen der Vorrichtung **(****Fig. 1a, Fig. 1b****)** noch eine Lichtquelle **50** z. B. einen Laser. Die Wellenlänge beträgt 350 nm bis 1500 nm bevorzugt 400 nm bis 1000 nm. Dieser bestrahlt die Messschicht **5** und das Nanopartikel **30** mit monochromatischem Licht. Dies ist das ursprüngliche Signal γ. Wenn das Nanopartikel **30** metallisch ist und/mit der Metallschicht **10** einen Resonator bildet, wird das Ramansignal, welches durch die Streuung der Strahlung an den Molekülen und/oder Atomen der raman-aktiven Schicht **15** entsteht, verstärkt.

Das resultierende zurückgestreute Signal γ' wird in allen geeigneten Ausführungsformen der Vorrichtung mittels einer Detektionsvorrichtung **70** z. B. einem Photosensor erfasst und anschließend ausgewertet.

**Fig. 2** zeigt den schematischen Aufbau einer Ausführungsvariante der Vorrichtung umfassend eine Messplatte mit Vertiefungen **25** in der Seitenansicht.

In der in **Fig. 2** gezeigten Vorrichtung fließt eine Probe mit Nanopartikeln **30** über Messplatte **20.** Diese Messplatte **20** besitzt Vertiefungen **25** unterschiedlicher Größe. Die Vertiefungen **25** sind so angeordnet, dass die Probe mit den Nanopartikeln **30** zuerst über die kleinsten und dann über immer größere Vertiefungen fließt (Flussrichtung **100**). Die Vertiefungen **25** sind so ausgebildet, dass nur Strukturen unterhalb einer bestimmten Größe in sie gelangen können. Diese Vertiefungen **25** umfassen zumindest abschnittsweise wenigstens eine Metallschicht (z.B. aus Elementmetallen wie Au, Ag, Cu oder Metalllegierungen) **10** und eine raman-aktive Schicht **15,** diese bilden die Messschicht **5.** Wenn die Nanopartikel **30** in die Vertiefungen **25** gelangen, bilden jeweils die Metallschicht (z.B. aus Elementmetallen wie Au, Ag, Cu oder Metalllegierungen) **10** und ein einzelner Nanopartikel **30** eine Resonatoranordnung, die im Wesentlichen mit der raman-aktiven Schicht **15** in der der Vertiefung **25** gefüllt ist. Diese Anordnung der Messschicht entspricht der Ausführungsvariante in **Fig. 1a****.** Nicht gezeigt, aber möglich, ist es, die Vorrichtung mit einer Anordnung der Metallschicht **10** und der ramanaktiven Schicht wie in einer der Abbildungen **Fig. 1b****,** auszuführen. Das heißt, eine Messplatte mit Vertiefungen **25** und eine Messspitze zu verwenden.

**Fig. 3** zeigt den schematischen Aufbau einer Ausführungsform eine Messplatte **20** mit Vertiefungen **25** in der Draufsicht.

Der Querschnitt der Vertiefungen **25** nimmt in Flussrichtung **100** der fließfähigen Probe zu. Dadurch kann aus der Position der Nanopartikel direkt deren Größe bestimmt werden.

### Bezugszeichen

- 5: Messschicht
- 10: Metallschicht
- 15: raman-aktive Schicht
- 20: Messplatte
- 21: Messsonde
- 25: Vertiefung
- 30: Nanopartikel
- 50: Lichtquelle
- 70: Detektorvorrichtung
- 100: Flussrichtung
- α: Neigungswinkel
- γ: ursprüngliches Signal
- γ': zurückgestreutes Signal

## Patentansprüche

1. Vorrichtung zur Charakterisierung von Nanopartikeln (30) in einer zu untersuchenden Probe, welche eine Messplatte (20), eine Lichtquelle (50), eine Detektorvorrichtung (70) und eine Messschicht (5) umfasst, wobei die Messschicht (5) eine Metallschicht (10) und eine raman-aktive Schicht (15) beinhaltet, wobei die Nanopartikel (30) einen Durchmesser der Querschnittsfläche von unter 500 nm aufweisen,
(i) die Messschicht (5) sich wenigstens auf Abschnitten der Oberfläche der Messplatte (20) befindet oder (ii) alternativ die Messplatte (20) selbst aus Metall besteht und allein die Metallschicht (10) bildet, wobei zur Ausbildung der Messschicht (5) die raman-aktive Schicht (15) auf die Messplatte (20) aufgebracht ist, oder (iii) auf der Oberfläche der Messplatte (20) keine Messschicht (5) ausgebildet ist, sondern es ist eine Messsonde (21) vorgesehen, auf deren Oberfläche zumindest abschnittsweise die Metallschicht (10) und auf dieser die raman-aktive Schicht (15) ausgebildet sind und die Messschicht (5) bilden,
die Metallschicht (10) und die raman-aktive Schicht (15) so zueinander angeordnet sind, dass die raman-aktive Schicht (15) dem Nanopartikel (30) zugewandt und mit diesem kontaktierbar angeordnet ist,
die Dicke der raman-aktiven Schicht (15) 1 nm bis 10 nm beträgt,
die Lichtquelle (50) einen monochromatischen Lichtstrahl einer Wellenlänge zwischen 350 und 1500 nm bereitstellt,
die raman-aktive Schicht (15) zur Erzeugung einer Ramanstreuung der Strahlung der Lichtquelle (50) dient und
die Detektorvorrichtung (70) das zurückgestreute Raman-Signal erfassen kann.

2. Vorrichtung gemäß Anspruch 1, **dadurch gekennzeichnet, dass** das Material der raman-aktiven Schicht (15) ein raman-aktiver Farbstoff ist, insbesondere Rhodamin, Cumarin oder Pyridin.

3. Vorrichtung gemäß Anspruch 1, **dadurch gekennzeichnet, dass** die Messplatte (20) ein Siliziumwafer oder eine Struktur aus Glas ist.

4. Vorrichtung gemäß Anspruch 1, **dadurch gekennzeichnet, dass** die Lichtquelle (50) ein Laser ist.

5. Vorrichtung zur Charakterisierung von Nanopartikeln (30) gemäß Anspruch 1, **dadurch gekennzeichnet, dass** die Messplatte (20) wenigstens zwei Vertiefungen (25) mit unterschiedlich großem Durchmesser der Querschnittsflächen von 1 nm bis 1000 nm aufweist, die Vertiefungen (25) so angeordnet sind, dass die Probe mit den Nanopartikeln (30) zuerst über die kleinsten und dann über größere Vertiefungen geführt wird oder sich bewegt, sodass die Durchmesser der Querschnittsflächen der Vertiefungen (25) in Flussrichtung ansteigen, so dass aus der Position der Nanopartikel (30) in den Vertiefungen (25) die Größe der Nanopartikel (30) bestimmbar ist.

6. Vorrichtung zur Charakterisierung von Nanopartikeln (30) gemäß einem der Ansprüche 1 bis 5 **dadurch gekennzeichnet, dass** die Vorrichtung einen Bereich mit einem elektrischem und/oder magnetischen Feld aufweist, welcher so ausgebildet ist, dass eine elektrische und/oder magnetische Kraft, welche in Richtung der Metallschicht (10) der Messschicht (5) gerichtet ist, auf metallische Nanopartikel (30) einer fließfähigen Probe wirkt.

7. Verwendung der Vorrichtung nach Anspruch 1 entweder zur Detektion und Identifikation von Nanopartikeln in Lebensmitteln oder zur Charakterisierung von bei der Trinkwasseraufbereitung gegebenenfalls nicht herausgefilterten Nanopartikeln in Wasser.

## Claims

1. Device for characterizing nanoparticles (30) in a sample to be examined, which device comprises a measuring plate (20), a light source (50), a detector device (70), and a measuring layer (5), wherein the measuring layer (5) contains a metal layer (10) and a Raman active layer (15), wherein the nanoparticles (30) have a cross-sectional area diameter of less than 500 nm, (i) the measuring layer (5) is located at least on sections of the surface of the measuring plate (20) or (ii) alternatively, the measuring plate (20) itself is composed of metal and forms the metal layer (10) alone, wherein for forming the measuring layer (5), the Raman active layer (15) is applied to the measuring plate (20), or (iii) no measuring layer (5) is formed on the surface of the measuring plate (20) and instead provision is made of a measuring probe (21), on the surface of which, at least in sections, the metal layer (10) is formed and the Raman active layer (15) is formed thereon and said layers form the measuring layer (5), the metal layer (10) and the Raman active layer (15) are arranged in relation to one another such that the Raman active layer is arranged facing the nanoparticle (30) and capable of contacting the latter, the thickness of the Raman active layer (15) is 1 nm to 10 nm, the light source (50) provides a monochromatic light ray with a wavelength between 350 and 1500 nm, the Raman active layer (15) serves for generating a Raman scattering of the radiation of the light source (50) and the detector device (70) can capture the backscattered Raman signal.

2. Device according to claim 1, **characterized in that** the material of the Raman active layer (15) is a Raman active dye, in particular rhodamine, coumarin, or pyridine.

3. The device according to claim 1, **characterized in that** the measuring plate (20) is a silicon wafer or a glass structure.

4. The device according to claim 1, **characterized in that** the light source (50) is a laser.

5. Device for characterizing nanoparticles (30) according to claim 1, **characterized in that** the measuring plate (20) has at least two wells (25) with cross-sectional area diameters of different sizes from 1 nm to 1000 nm, the wells (25) are arranged such that the sample with the nanoparticles (30) is first guided or moves over the smallest and then over larger wells such that the diameters of the cross-sectional areas of the wells (25) increase in the flow direction and the size of the nanoparticles (30) can thus be determined from the position of the nanoparticles (30) in the wells (25).

6. Device for characterizing nanoparticles (30) according to one of claims 1 through 5, **characterized in that** the device has an area with an electric and/or magnetic field, which is formed such that an electric and/or magnetic force, which is directed towards the metal layer (10) of the measuring layer (5), acts on metallic nanoparticles (30) of a fluid sample.

7. Use of the device according to claim 1, either for detecting and identifying nanoparticles in foods or for characterizing any nanoparticles in water not filtered out during the processing of drinking water.

## Revendications

1. Dispositif pour la caractérisation de nanoparticules (30) dans un échantillon à analyser, comprenant une plaque de mesure (20), une source lumineuse (50), un dispositif de détection (70) et une couche de mesure (5), **caractérisé en ce que** la couche de mesure (5) contient une couche métallique (10) et une couche active en Raman (15), **caractérisé en ce que** les nanoparticules (30) ont un diamètre de la section transversale inférieur à 500 nm, (i) caractérisé en que la couche de mesure (5) est située au moins sur des parties de la surface de la plaque de mesure (20) ou bien (ii), alternativement, **caractérisé en ce que** la plaque de mesure (20) elle-même est réalisée en métal et qu'elle forme à elle seule la couche de métal (10), **caractérisé en ce que**, pour former la couche de détection (5), la couche active en Raman (15) est placée sur la plaque de mesure (20), ou bien que (m) sur la surface de la couche de mesure (20) aucune couche de mesure (5) ne soit formée, mais qu'une sonde de mesure (21) soit prévue, sur la surface sur laquelle, au moins partiellement, la couche métallique (10) et sur celle-ci, la couche active en Raman (15), soient formées et qu'elles forment la couche de mesure (5), et **caractérisé en ce que** la couche de métal (10) et la couche active en Raman (15) soient disposées l'une par rapport à l'autre de telle sorte que la couche active en Raman (15) soit tournée vers la nanoparticule (30) et qu'elle soit disposée en contact avec celle-ci, et que l'épaisseur de la couche active en Raman (15) soit de 1 nm à 10 nm, la source lumineuse (50) fournit un faisceau de lumière monochromatique d'une longueur d'onde de 350 à 1500 nm, que la couche active en Raman (15) serve à produire une diffusion Raman de rayonnement de la source lumineuse (50) et que le dispositif de détection (70) puisse capter le signal Raman rétrodiffusé.

2. Dispositif selon la revendication 1, **caractérisé en ce que** le matériau de la couche active en Raman (15), est un colorant actif Raman, en particulier rhodamine, coumarine ou pyridine.

3. Dispositif selon la revendication 1, **caractérisé en ce que** la plaque de mesure (20) est une plaquette de silicium ou une structure en verre.

4. Dispositif selon la revendication 1, **caractérisé en ce que** la source lumineuse (50) est un laser.

5. Dispositif pour la caractérisation de nanoparticules (30) selon la revendication 1, **caractérisé en ce que** la plaque de mesure (20) possède au moins deux évidements (25) avec des diamètres différents de sections allant de 1 nm à 1000 nm, **caractérisé en ce que** les évidements (25) sont agencés de manière à ce que l'échantillon avec les nanoparticules (30) soit conduit d'abord à travers les plus petits évidements et ensuite à travers les plus grands, de sorte que le diamètre des sections transversales des évidements (25) augmentent dans le sens d'écoulement, de sorte qu'on puisse déterminer, à partir de la position des nanoparticules (30) dans les évidements (25), la taille des nanoparticules (30).

6. Dispositif pour la caractérisation de nanoparticules (30) selon l'une quelconque des revendications 1 à 5, **caractérisée en ce que** le dispositif présente une région avec un champ électrique et/ou magnétique, qui est formé de telle sorte qu'une force électrique et/ou magnétique, qui est orientée vers la couche de métal (10) de la couche de mesure (5), soit exercée sur les nanoparticules métalliques (30) d'un échantillon fluide.

7. Utilisation du dispositif selon la revendication 1, que ce soit pour la détection et l'identification des nanoparticules dans des denrées alimentaires ou pour la caractérisation de nanoparticules éventuellement non filtrées dans le traitement de l'eau potable.
